# EUROPEAN PATENT APPLICATION

(11) **EP 1 036 816 A1**
(43) Date of publication of application: **20.09.2000**
(21) Application number: 00830189.7
(22) Date of filing: 13.03.2000
(51) Int. Cl.: C08L 27/06

(54) **Polymeric materials with a polyvinyl chloride and polyester-carbonate base**

(30) Priority: 15.03.1999 IT BO990120
(71) Applicant: EVC Compounds (Italia) S.p.A., 48100 Ravenna (IT)
(72) Inventor: Ferruti, Paolo, 20100 Milano (IT); Latini, Giuseppe, 72100 Brindisi (IT)
(74) Representative: Lanzoni, Luciano

(57) **Abstract**

The present invention relates to polyvinyl chloride (PVC)-based polymeric materials comprising polycaprolactone (PCL) derivatives in which the polycaprolactone (PCL) derivatives contain segments of polycaprolactone (PCL) with a molecular weight of between 500 and 15,000, linked or unlinked to segments of polyoxyethylene glycols (PEGs) or polyoxypropylene glycols with a molecular weight of between 188 and 4,000, said materials being defined by the following general formula: 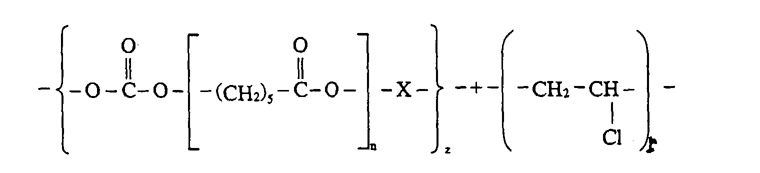 Where:
- n is a number between 4 and 135;
- z is a number between 5 and 300;
- r is a number between 200 and 20,000.

## Description

The present invention relates to polymeric materials with a polyvinyl chloride (PVC) and polyester-carbonate base.

More specifically, the present invention relates to PVC polymeric alloys and derivatives of polycaprolactone (PCL) formed from polyester-carbonates, which can be used as polymeric materials in place of conventional materials consisting of PVC with added plasticisers.

The material which is the subject matter of the present invention may, therefore, be used in all sectors where conventional PVC is used, with or without known added plasticisers for making objects, more specifically, objects or devices made of bio-compatible materials for medical use.

As is known, PVC is a rigid substance which has few practical applications in its pure form.

It must, therefore, always (or almost always) have added stabilisers, plasticisers, etc.

As is known, in order to obtain plasticised PVC, plasticisers of the phthalate family (DOP) must be added to the PVC.

It is also known that such plasticisers are toxic to humans, and legislation greatly limits the use of plasticised PVC in various countries.

In order to overcome this disadvantage, some manufacturers have modified the structure of the substances constituting the material.

One example is the content of European patent EP 0 301 632 regarding the compositions based on polyvinyl chloride and poly-ε-caprolactone. Such compositions are not, strictly speaking, PVC-based, but are formed from copolymers of vinyl chloride and acrylates.

The above-mentioned patent, therefore, relates to compositions of copolymers of vinyl chloride and acrylates mixed with caprolactone.

In order to eliminate the problematic tendency of PVC to crystallise, patent EP 0 301 632 discloses a modified PVC chain and, therefore, the material used in this case is not PVC.

The disadvantage of this technique consists in the fact that PVC cannot be used in order to obtain the end product. Instead a copolymer of the following type is used: 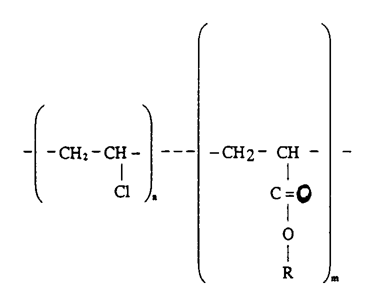 (where: R = CH₂ or C₂H₅, etc.)
which is a form of inner plasticization (as is known, polyacrylates are basically rubbers).

If PCL is mixed with this copolymer (rather than with PVC), the crystals no longer separate, since the solubility of the PCL in the copolymer is increased.

The main aim of the present invention is, therefore, to overcome the disadvantages of the prior art by providing a new polymeric material which is completely non-toxic, is bio-compatible and bio-degradable, with chemical - physical and mechanical properties similar to those of conventional plasticised PVC.

This aim and others are achieved by the polyvinyl chloride and polyester-carbonate polymers which form the subject matter of the present invention, whose main characteristics are indicated in the claims below.

Briefly, in accordance with the present invention, a carbonate was added to a known PCL molecule: 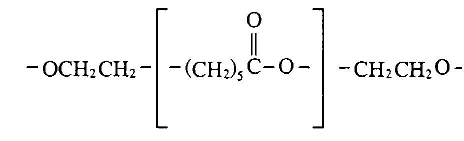 giving a copolymer of the following type:

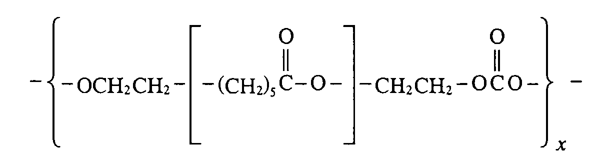

It should be noticed that this substance is no longer a PCL, since the molecule contains a carbonate link.

It is a polyester-carbonate, which is a new substance.

Advantageously, this has a very high molecular weight (around 50,000) and therefore, since the molecule is large, the problem of "bleeding" no longer exists when it is combined with other molecules. In fact, a PCL with low molecular weight tends to bleed when combined with other substances. At the same time, the tendency of the PCL with a higher molecular weight to crystallise is very limited, since the groups which would tend to crystallise are not aligned in a regular manner within the molecule, but are arranged in an irregular structure. As a result, the tendency to reverse the mixing process due to the separation of crystals is very limited in this new substance (polyester-carbonate).

There is also a third important advantage.

Alongside these products, it is possible to make copolymers in which branches of the polyester-carbonate are linked to branches of polyoxyethylene glycols (hereinafter referred to with the abbreviation PEG) of the following type:

-(-OCH₂CH₂-)ₘ-

The substances obtained are, therefore, copolymers of PCLs attached with carbonate links, but mixed, of the following type:

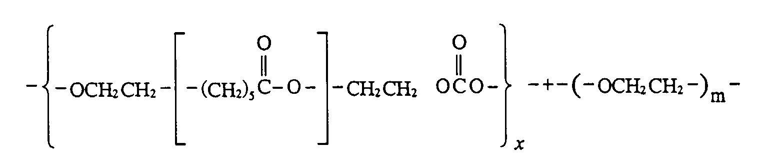

The advantage of this new material lies in the fact that the PEGs are absorbent and it is known that they confer improved bio-compatibility on the end product in which they are included.

This means that, in terms of bio-compatibility, the outer surface of the end product is improved (therefore, the products are particularly suitable for medical use), whilst the compound remains insoluble in water.

This is the third advantage referred to above.

These new products (polyester-carbonates), with the special characteristics indicated above, are advantageously suitable for combination with PVC.

This means that it is possible to obtain PVC-based polymeric materials containing segments of PCL with a molecular weight varying between 500 and 15,000, preferably between 600 and 5,000, linked or unlinked to segments of PEGs or polyoxypropylene glycols with a molecular weight varying between 188 and 4,000, preferably between 130 and 1,500.

These materials may be defined using the following general formula: 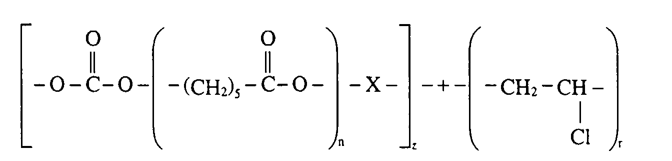 where:
- n is a number between 4 and 135, preferably between 5 and 40;
- z is a number between 5 and 300, preferably between 10 and 200;
- r is a number between 200 and 20,000;
- X may be: a) an alkylenic group with the following general formula: 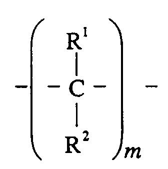
where
R¹ and R² may be H , CH₃ or C₂H₅, preferably H or CH₃;
- m is a number between 2 and 6, preferably between 2 and 4;
- X may be: b) a group with the following general formula: 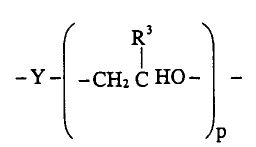
in which:
- R³ may be H or CH₃;
- p is a number between 2 and 90, preferably between 3 and 34;
where:
- Y may be zero or a group: 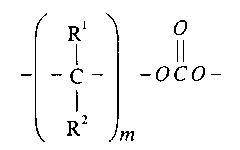
in which:
- R¹ and R² may be H, CH₃, C₂H₅, preferably H or CH₃;
- m is a number between 3 and 6, preferably between 2 and 4;

The following are four examples of the creation of these new polymeric materials which can subsequently be mixed with PVC, indicated by way of example only.

### Example A.

12.50 g of poly-ε-caprolactone diole with molecular weight 1,250, obtained for example from a chemical trader, are dissolved in 100 ml anhydrous chloroform with no alcohol impurities. Then 2.58 g of N-ethyl-N,N-diisopropylamine is added to this mixture and the mixture is cooled to 15^{º}C using an external water bath. 5.45 ml of a solution of COCl₂ in 20% toluene is added to the mixture. The mixture is left to react in an agitator for 6 hours. When this period has elapsed, the mixture is extracted several times with slightly acidic water, then with water until it has a neutral pH, and finally it is desiccated on sodium sulphate and evaporated until it is dry.

13 g of polycaprolactone carbonate are obtained, with a molecular weight of 25,000.

### Example B.

Proceeding precisely as described in the example above, but substituting a mixture of 6.25 g poly-ε-caprolactone diole with molecular weight 1,250 and polyethylene glycol with molecular weight 1,000 for the 12.50 g of poly-ε-caprolactone diole indicated above. The end product obtained is 11.50 g of co-(poly-ε-caprolactone-polyethylene glycol) carbonate, with a molecular weight of 22,000.

### Example C.

Proceeding precisely as described in example A above, but substituting 5.3 g poly-ε-caprolactone diole with molecular weight 530 for the 12.50 g poly-ε-caprolactone diole with molecular weight 1,250 indicated. The end product obtained is 5.5 g of poly (ε-caprolactone) polycarbonate with a molecular weight of 12,000.

### Example D.

Proceeding precisely as described in example B above, other co-(poly-ε-caprolactone-polyethylene glycol) carbonate products were prepared, as shown in the following table

| MOLECULAR WEIGHT AND GRAMS OF POLY-ε-CAPROLACTONE | MOLECULAR WEIGHT AND GRAMS OF POLYETHYLENE GLYCOL | GRAMS OF PRODUCT OBTAINED | MOLECULAR WEIGHT OF PRODUCT OBTAINED |
|---|---|---|---|
| 530; 5.3 | 400; 4 | 9.5 | 10,000 |
| 1250;12.5 | 400; 4 | 17 | 11,000 |
| 5000; 25.0 | 400; 4 | 29 | 18,000 |
| 530; 5.3 | 1000; 10 | 15 | 15,000 |
| 1250;12.5 | 600; 6 | 18 | 20,000 |
| 5000; 25.0 | 1000; 5 | 30 | 30,000 |
| 530; 5.3 | 1500; 15 | 19 | 13,000 |
| 1250; 12.5 | 1500; 15 | 27.5 | 21,000 |
| 5000; 25.0 | 1500; 7.5 | 32 | 26,000 |
| 530; 5.3 | 200; 2.0 | 7.5 | 14,000 |

It should be noticed that commercial polycaprolactone (PCL), mixed for example with triethylene glycol bis-chloroformate (TBC) produces a polyester-carbonate with the above-mentioned general formula, of the type: 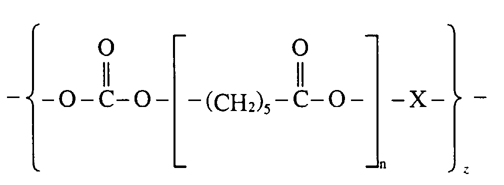 which can be mixed with PVC in any proportions, giving hardness measurements ranging from a Shore A of around 40 (highly plasticised product) to a Shore D of around 80 (practically rigid product).

The products obtained with these mixtures have chemical and physical properties similar to those obtained with the corresponding mixtures containing PVC and conventional liquid plasticisers.

The results obtained in the laboratory with the following compositions are shown by way of example:

| | Composition 1 | Composition 2 |
|---|---|---|
| PVC | 100 | 100 |
| PCL mixed with TBC | 72 | 52 |
| epoxy soya oil | 8 | 8 |
| one-pack calcium/zinc | 2.3 | 2.3 |

| MECHANICAL PROPERTIES | | | | | | |
|---|---|---|---|---|---|---|
| | | | Comp. 1 | Comp. 2 | STD.1 (*) | STD.2 (*) |
| Specific weight | g/cm3 | ISO | 1.265 | 1.290 | 1.220 | 1.260 |
| Hardness | Shore A | ISO | 72 | 85 | 72 | 85 |
| Breaking load | N/mm2 | ISO | 11.5 | 15 | 14 | 19 |
| Stretching | % | ISO | 300 | 260 | 390 | 320 |

| RELEASE TESTS ACCORDING TO OFFICIAL (ITALIAN) PHARMACOPEIA IX ED. and EEC 11 ED. | | | | | |
|---|---|---|---|---|---|
| | | Comp. 1 | Comp. 2 | STD.1 (*) | STD. (*) |
| Oxidizable | cm3 | 1 | 0.8 | 0.7 | 0.6 |
| Acidity | cm3 | 0.1 | 0.09 | 0.1 | 0.1 |
| "UV" absorption | ABS | 0.23 | 0.20 | 0.11 | 0.1 |

| | | | | | |
|---|---|---|---|---|---|
| (*) Standard mixtures of PVC + conventional phthalate plasticisers of identical hardness. | | | | | |

As can be seen, the materials obtained have the same chemical, physical and mechanical properties as the conventional plasticised PVC used today. However, in this particular case the product is completely non-toxic, is bio-compatible and biodegradable.

In addition to the above-mentioned specifications, the present invention may obviously be subject to variations in practical applications, as considered suitable in each case, without thereby departing from the scope of the inventive concept.

## Claims

1. Polyvinyl chloride (PVC)-based polymeric materials comprising polycaprolactone (PCL) derivatives, characterised in that the polycaprolactone (PCL) derivatives contain segments of polycaprolactone (PCL) with a molecular weight of between 500 and 15,000, the latter being linked or unlinked to segments of polyoxyethylene glycols (PEGs) or polyoxypropylene glycols with a molecular weight of between 188 and 4,000, it being possible to define said materials with the following general formula: 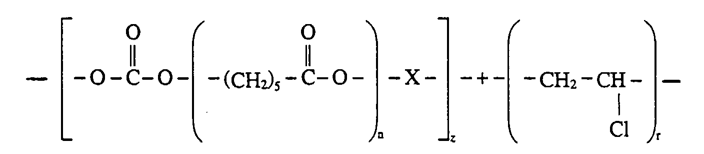 where:
- n is a number between 4 and 135;
- z is a number between 5 and 300.
- r is a number between 200 and 20,000.

2. The polymeric materials according to claim 1, characterised in that the molecular weight of the segments of polycaprolactone (PCL) is preferably between 600 and 5,000.

3. The polymeric materials according to claim 1, characterised in that the molecular weight of the segments of polyoxyethylene glycols (PEGs) or polyoxypropylene glycols is preferably between 130 and 1,500.

4. The polymeric materials according to claim 1, characterised in that the number n is preferably between 5 and 40.

5. The polymeric materials according to claim 1, characterised in that the number z is preferably between 10 and 200.

6. The polymeric materials according to claim 1, characterised in that the group X in the general formula is an alkylenic group having the following general formula: 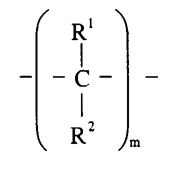 where:
- R¹ and R² may be H, CH₃ or C₂H₅;
- m is a number between 2 and 6..

7. The polymeric materials according to claim 6, characterised in that the groups R¹ and R² are preferably H or CH₃.

8. The polymeric materials according to claim 6, characterised in that the number m is preferably between 2 and 4.

9. The polymeric materials according to claim 1, characterised in that the group X in the general formula is a group with the following general formula: 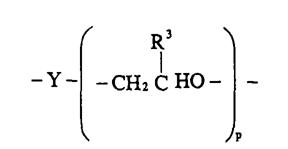 where:
- R³ may be H or CH₃;
- p is a number between 2 and 90.

10. The polymeric materials according to claim 9, characterised in that the number p is preferably between 3 and 34.

11. The polymeric materials according to claim 9, characterised in that the group Y is zero.

12. The polymeric materials according to claim 9, characterised in that the group Y has the following general formula: 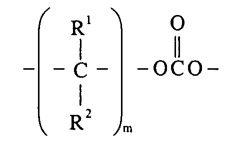 where:
- R¹ and R² may be H, CH₃ or C₂H₅;
- m is a number between 2 and 6.

13. The polymeric materials according to claim 12, characterised in that the groups R¹ and R² are preferably H or CH₃.

14. The polymeric materials according to claim 12, characterised in that the number m is preferably between 2 and 4.
